Europäisches Patentamt

European Patent Office

Office européen des brevets

(19)

(11) EP 0 893 783 A1

## (12) DEMANDE DE BREVET EUROPEEN

(43) Date de publication:
27.01.1999 Bulletin 1999/04

(51) Int Cl.$^6$: **G06T 5/20**

(21) Numéro de dépôt: 98401751.7

(22) Date de dépôt: 09.07.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 24.07.1997 FR 9709416

(71) Demandeur: ALCATEL ALSTHOM COMPAGNIE GENERALE D'ELECTRICITE
75008 Paris (FR)

(72) Inventeur: Guedj, Cyril
91440 Bures/Yvette (FR)

(74) Mandataire: Sciaux, Edmond et al
Compagnie Financiere Alcatel,
Département D.P.I.,
30, avenue Kléber
75016 Paris (FR)

(54) **Procédé de filtrage d'images numériques par convolution avec un noyau déterminé par la méthode de Savitzky et Golay**

(57) Procédé de filtrage d'image numérique, consistant à effectuer une convolution entre ladite image et un noyau de convolution, caractérisé en ce que les coefficients dudit noyau sont déterminés, sur un ou plusieurs alignements dudit noyau, par la méthode de Savitzky et Golay, et nuls partout ailleurs.

FIG_2

**Description**

La présente invention concerne un procédé de filtrage d'images numériques par convolution avec un noyau réalisant une approximation locale polynomiale de l'image. Plus précisément, cette approximation est solution de la méthode des moindres carrés. L'invention trouve notamment une application dans le domaine des images numériques issues de microscopes électroniques à haute résolution.

De façon connue, une image numérique est constituée d'un tableau à deux dimensions de points ou pixels (pour *picture element* en anglais).

On peut distinguer deux sortes bien différentes d'images numériques : les images de synthèse et les images issues d'un capteur (microscope électronique, scanner, caméra, etc.). L'invention est plus particulièrement relative aux images de la seconde espèce. En effet, les capteurs n'étant pas parfaits, les images qui en sont issues présentent un bruit dont la nature dépend du capteur. Dans le cas du microscope électronique susmentionné, une des composantes du bruit est dite fractale. Il s'agit d'un des types de bruits les plus difficiles à supprimer par les techniques connues de traitement d'images.

D'une façon générale, la majorité des techniques récentes de filtrage d'images numériques se basent sur une approche fréquentielle du filtrage. De façon toujours générale, ces techniques consistent à effectuer une transformée de type transformée de Fourier, puis à réaliser un traitement dans le domaine fréquentiel, typiquement un filtrage passe-bande (par exemple une apodisation), et enfin à effectuer une transformée inverse afin de revenir dans l'espace initial. Classiquement, le traitement réalisé dans le domaine fréquentiel consiste à séparer le spectre fréquentiel de l'image de celui du bruit afin d'éliminer ce dernier.

Ces techniques sont actuellement très utilisées, mais elles présentent cependant de nombreux inconvénients :

Premièrement, même dans les mises en oeuvre de type FFT (pour *Fast Fourier Transform* en anglais), une transformée de Fourier reste une opération coûteuse en temps de calcul. En effet, la complexité algorithmique qui donne l'évolution du nombre d'opérations en fonction du nombre N des données d'entrées, est égale à $N \times Log_2(N)$. Il en va de même pour d'autres transformées mathématiques comme, par exemple, la transformée en cosinus ou la FHT (pour *Fast Hartley Transform* en anglais).

De plus, les approches de type FFT nécessitent que le signal se présente sous la forme d'une matrice carrée dont les dimensions sont des puissances de 2, ce qui est bien sûr gênant pour le traitement d'images qui peuvent *a priori* être de dimensions quelconques.

Par ailleurs, un des effets pernicieux d'un filtrage fréquentiel basé sur une transformée de Fourier est de décaler le signal traité. En effet, par définition, après une transformée de Fourier, on a une somme de fonctions de type sinus. Or le calcul d'un sinus sur un ordinateur implique de nombreux arrondis qui font que, d'une façon générale, une méthode basée sur une transformée de type Fourier induit une imprécision du résultat.

Enfin, les techniques basées sur la FFT n'obtiennent pas de bonnes performances avec un bruit de type bruit fractal, car celui-ci n'est pas localisé dans une bande de fréquence précise qui pourrait être supprimée par un filtre de type passe-bande. De plus, les techniques d'apodisation mentionnées précédemment sont difficiles à automatiser dans le cas général.

La convolution d'une image numérique avec une matrice de relativement petite taille, appelée noyau, est une autre technique connue de l'état de l'art.

Dans la suite, nous allons adopter les notations suivantes. L'image avant filtrage est notée I, et chaque point de celle-ci est désigné par I(x, y) où x et y sont les coordonnées du point. De la même façon, l'image après filtrage est notée I', et chaque point de celle-ci est noté I'(x, y). On note N le noyau de la convolution. On note 2a+1 et 2b+1 ses dimensions. La plupart du temps, les noyaux de convolution sont carrés et, par conséquent, a=b.

Les points de l'image I' peuvent s'exprimer par l'équation suivante :

$$I'(x, y) = \frac{1}{K} \sum_{i=-a}^{a} \sum_{j=-b}^{b} I(x + i, y + j) \cdot N(i, j)$$

dans laquelle K est un coefficient normalisateur dont le but est de donner à l'image I' la même dynamique (c'est-à-dire le même intervalle de valeurs utilisées) que celle de I. Par exemple, pour une image I comprenant 256 niveaux de gris (c'est-à-dire pour laquelle la couleur est codée sur un octet), K doit être choisi de sorte que les valeurs de I' se répartissent au mieux dans l'intervalle [0; 255].

L'effet de la convolution d'une image avec un noyau dépend de ce dernier. De nombreux noyaux existent, chacun ayant des propriétés et des performances très différentes. Parmi les plus connus, on peut par exemple citer les noyaux de Prewitt et de Sobel dont le but est le renforcement des contours. On peut indiquer aussi un noyau de la forme suivante :

$$\begin{bmatrix} 1 & 1 & 1 \\ 1 & 1 & 1 \\ 1 & 1 & 1 \end{bmatrix}$$

dont le but est d'effectuer un filtrage simple d'une image numérique. La convolution correspond alors à remplacer la valeur de chaque pixel par la valeur moyenne calculée sur l'ensemble des voisins de ce pixel.

Ce procédé est néanmoins assez lourd dans la mesure où, toutes les valeurs de la matrice étant différentes de 0, le nombre d'opérations à effectuer pour calculer la valeur d'un pixel est important.

De plus, un simple calcul de moyenne ne peut pas donner de résultats satisfaisant dans la mesure où le signal et le bruit ne sont pas différenciés lors de ce traitement.

Pour avoir plus de renseignements sur les techniques de convolution d'une image numérique par un noyau, le lecteur peut se référer à l'un des multiples ouvrages traitant de l'analyse d'images numériques. On peut par exemple citer l'ouvrage *Handbook of Image Processing Operators* de Reinhard Klette et Piero Zamperoni aux éditions John Wiley *and Sons*.

Le but de la présente invention est de proposer un procédé de filtrage d'une image numérique, qui ne présente pas les inconvénients des techniques fréquentielles ni de la convolution avec un noyau comme celui mentionné précédemment.

À cet effet, l'invention a pour objet un procédé de filtrage d'une image numérique, consistant à effectuer une convolution entre cette image et un noyau de convolution. Elle se caractérise en ce que les coefficients dudit noyau sont déterminés, sur un ou plusieurs alignements de ce noyau; par la méthode de Savitzky et Golay, et nuls partout ailleurs.

Un second but de l'invention est de proposer un procédé de dérivation dune image numérique, à un degré quelconque, et présentant les mêmes avantages.

L'invention telle que revendiquée ainsi que d'autres de ses avantages apparaîtront de façon plus claire dans la description suivante, faite en relation avec les dessins annexés.

La figure 1 illustre schématiquement la méthode de Savitzky et Golay en en fixant les notations utilisées.

La figure 2 montre une mise en oeuvre d'utilisation des résultats de la méthode de Savitzky et Golay pour construire un noyau selon l'invention.

Les figures 3 et 4 donnent deux autres mises en oeuvre non exhaustives de dispositions des coefficients calculés pour former des noyaux de convolution selon l'invention.

L'article *Smoothing and Differentiation of Data by Simplified Least Squares Procedures* de Abraham Savitzky et Marcel J. E. Golay, paru dans *Analytical Chemistry*, volume 36, numéro 8, juillet 1964 se proposait de résoudre le problème technique du filtrage d'un ensemble de données de mesure. Ces valeurs de mesure se présentent sous la forme d'une suite ordonnée de valeurs, chacune de ces valeurs ayant une composante correspondant à une grandeur physique mesurée, et une composante de bruit.

Pour cela, la méthode décrite consiste à convoluer l'ensemble des données de mesure par un vecteur dont les valeurs sont calculées de façon à approximer localement l'ensemble des données de mesure par un polynôme de degré choisi. L'approximation est une minimisation de l'erreur quadratique moyenne entre les valeurs des données de mesure et les valeurs du polynôme d'approximation.

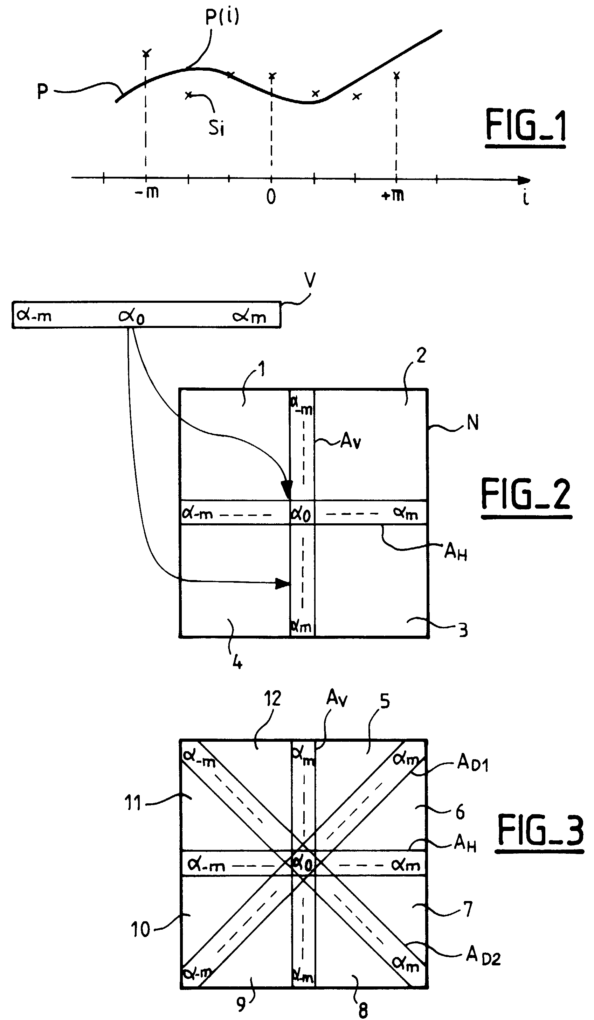

La figure 1 représente un signal s dont on connaît des échantillons si pris à intervalles réguliers. On veut approximer ce signal s par un polynôme p de degré n sur un intervalle [-m ; m] contenant 2m+1 valeurs de s.

On peut exprimer le polynôme p de la façon suivante :

$$p(i) = \sum_{k=0}^{n} b_{nk}\, i^{k}$$

Selon cette notation $b_{nk}$ est le coefficient du terme de degré k pour un polynôme p de degré n. La variable i est une variable discrète qui varie entre -m et +m.

Minimiser l'erreur quadratique moyenne entre le signal s et le polynôme p revient à chercher le minimum de l'expression suivante :

$$\sum_{i=-m}^{i=m} \left(s_i - p(i)\right)^2$$

dans laquelle $s_i$ est l'échantillon du signal s, repéré par l'indice i.

Afin de trouver le minimum de cette expression, on recherche quand s'annulent les dérivées de l'expression précédente par rapport aux différents coefficients $b_{nk}$ du polynôme d'approximation :

$$\frac{\partial \sum_{i=-m}^{i=+m} \left(s_i - p(i)\right)^2}{\partial b_{nk}} = 0 \ , \ \forall k \in \left[0 \, ; \, n\right]$$

D'où :

$$\sum_{i=-m}^{i=+m} \left[\left(\sum_{k=0}^{k=n} b_{nk} \, i^k\right) - s_i\right] \cdot i^r = 0 \text{, avec } r \in [0 \, ; \, n]$$

ou encore :

$$\sum_{k=0}^{k=n} b_{nk} \sum_{i=-m}^{i=+m} i^{k+r} = \sum_{i=-m}^{i=+m} s_i \, i^r \text{, avec } r \in [0 \, ; \, n] \qquad [I]$$

À partir de cette équation, on obtient, pour chaque valeur du degré n du polynôme, un système d'équations déterminant $b_{nk}$ en fonction des échantillons $s_i$ du signal. On arrive finalement à une expression de la forme :

$$b_{nk} = \sum_{i=-m}^{i=+m} \alpha_i \, s_i \qquad [II]$$

On considère alors que l'ensemble des valeurs $\alpha_i$ forme le vecteur avec lequel est convolué le signal. Ce vecteur forme le résultat de la méthode de Savitzky et Golay. Il dépend de trois paramètres : le degré n du polynôme, la taille m de l'intervalle et le coefficient k.

Ce coefficient k correspond au degré de dérivation. Ainsi, lorsque k=0, le vecteur formé par les $\alpha_i$ permet de filtrer le signal. Lorsque k=1, le vecteur formé par les $\alpha_i$ permet de filtrer le signal et de le dériver lors de la même convolution. Lorsque k=2, le résultat obtenu par convolution du signal et du vecteur formé par les $\alpha_i$ est un signal filtré correspondant à la dérivée seconde du signal de départ.

Le choix du paramètre k dépend donc de l'effet recherché par l'utilisateur de la méthode.

Afin de rendre plus claire la méthode de Savitzky et Golay, on peut prendre un exemple particulier et fixer n=3, m=4 (soit un intervalle comprenant 9 échantillons) et k=3 (on cherche donc un vecteur permettant d'obtenir la dérivée troisième du signal).

L'équation [I] donne :

$$\sum_{k=0}^{k=3} b_{3k} \underbrace{\sum_{i=-4}^{i=+4} i^{k+r}}_{S_{r+k}} = \underbrace{\sum_{i=-4}^{i=+4} s_i \, i^r}_{F_r} \text{, avec } r \in [0 \, ; \, 3]$$

ce qui donne, de façon plus extensive, le système à 4 équations suivant :

$$\begin{cases} b_{30}S_0 + b_{31}S_1 + b_{32}S_2 + b_{33}S_3 = F_0 \\ b_{30}S_1 + b_{31}S_2 + b_{32}S_3 + b_{33}S_4 = F_1 \\ b_{30}S_2 + b_{31}S_3 + b_{32}S_4 + b_{33}S_5 = F_2 \\ b_{30}S_3 + b_{31}S_4 + b_{32}S_5 + b_{33}S_6 = F_3 \end{cases}$$

Dans ce système les coefficients $S_{r+k}$ sont connus et facilement calculables. On peut d'ailleurs remarquer que $S_{r+k}=0$ lorsque r+k est un nombre impair. Le système de ci-dessus peut donc se simplifier en :

$$\begin{cases} b_{30}S_0 + b_{32}S_2 = F_0 & \text{(équation 1)} \\ b_{31}S_2 + b_{33}S_4 = F_1 & \text{(équation 2)} \\ b_{30}S_3 + b_{32}S_4 = F_2 & \text{(équation 3)} \\ b_{31}S_4 + b_{33}S_6 = F_3 & \text{(équation 4)} \end{cases}$$

On cherche alors à exprimer le coefficient $b_{33}$ en fonction des termes $F_r$ et $S_{r+k}$, ce qui s'obtient par les équations 2 et 4. On a alors :

$$b_{33} = \frac{F_3 S_2 - F_1 S_4}{S_2 S_6 - S_4^2}$$

Finalement, en exprimant et calculant les termes $S_{r+k}$ et $F_r$, on obtient l'équation suivante :

$$b_{33} = \underbrace{-14}_{\alpha_{-4}} \cdot s_{-4} + \underbrace{7}_{\alpha_{-3}} \cdot s_{-3} + \underbrace{13}_{\alpha_{-2}} \cdot s_{-2} + \underbrace{9}_{\alpha_{-1}} \cdot s_{-1} + \underbrace{0}_{\alpha_0} \cdot s_0 + \underbrace{9}_{\alpha_1} \cdot s_1 + \underbrace{13}_{\alpha_2} \cdot s_2 + \underbrace{7}_{\alpha_3} \cdot s_3 \underbrace{-14}_{\alpha_4} s_4$$

Sur cette équation, on identifie les valeurs des $\alpha_i$ comme étant les coefficients devant les si, comme cela est défini par l'équation [II]. Le vecteur que l'on retient pour la convolution est donc : [-14; 7; 13; 9; 0; 9; 13; 7; -14]

Le procédé selon l'invention consiste à convoluer une image numérique avec un noyau dont les coefficients sont déterminés sur certains alignements par la méthode de Savitzky et Golay.

La figure 2 indique la façon dont on peut utiliser le résultat de la méthode de Savitzky et Golay pour la construction d'un noyau de convolution.

La référence V indique un vecteur obtenu par la méthode de Savitzky et Golay. Ce vecteur est formé de 2m+1 coefficients et peut s'écrire $[\alpha_{-m}...\alpha_0...\alpha_m]$. Ces coefficients sont alors disposés selon un ou plusieurs alignements dans une matrice carrée de taille 2m+1. Sur la figure 2, ces coefficients sont disposés selon deux alignements de cette matrice N (c'est-à-dire du noyau de convolution) : suivant la ligne $A_H$ passant par le centre du noyau N, et suivant la colonne $A_V$ passant par le centre du noyau N. Les zones 1, 2, 3 et 4 contiennent des coefficients nuls.

La figure 3 montre un deuxième exemple de construction d'un noyau à partir des coefficients calculés par la méthode de Savitzky et Golay.

En plus des alignements $A_H$ et $A_V$, les coefficients issus de la méthode de Savitzky et Golay sont disposés selon les deux diagonales $A_{D1}$ et $A_{D2}$ passant par le centre du noyau (c'est-à-dire les bissectrices du noyau N). Les zones 5, 6, 7, 8, 9, 10, 11 et 12 contiennent uniquement des coefficients nuls.

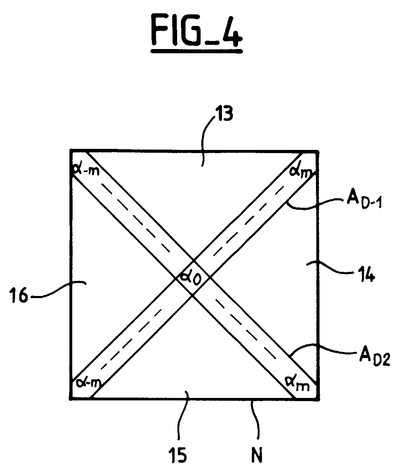

La figure 4 montre un troisième exemple de disposition : les coefficients calculés par la méthode de Savitzky et Golay sont disposés selon les deux diagonales $A_{D1}$ et $A_{D2}$. Les zones 13, 14, 15 et 16 contiennent uniquement des coefficients nuls.

Ces trois exemples de mise en oeuvre de l'invention ne sont bien sûr pas exhaustifs, et il est possible, pour l'homme du métier, d'imaginer d'autres dispositions des coefficients pour former un noyau de convolution.

On remarque que la méthode de Savitzky et Golay donne un vecteur de valeurs $\alpha_i$ symétrique par rapport à son centre (c'est-à-dire que pour tout $i\in[-m\,;\,m]$, $\alpha_i=\alpha_{-i}$). En raison de la méthode utilisée pour la construction des noyaux, ceux-ci héritent de cette propriété et sont, par conséquent, invariants par rotation. Autrement dit, le résultat du filtrage d'une image par le procédé selon l'invention ne dépend pas de l'orientation de celle-ci.

On remarque aussi que les coefficients non nuls ne sont présents que sur certains alignements du noyau. La proportion de ces valeurs non nulles diminue lorsque la taille du noyau augmente. On a donc une majorité de 0 (c'est-à-dire une matrice creuse). Par conséquent, la convolution avec un noyau selon l'invention est très rapide, comparée avec une convolution avec un autre noyau.

De plus, les valeurs des coefficients non nuls sont des valeurs entières. Or on sait que sur un ordinateur classique, les opérations sur des valeurs entières sont beaucoup plus rapides que les opérations sur des valeurs réelles.

Selon l'article de A. Savitzky et M. Golay susmentionné, il est possible d'obtenir des coefficients qui au lieu de simplement filtrer (i.e. retirer le bruit) de l'image, permet d'obtenir une image dérivée de l'image de départ.

Ainsi, les coefficients $\alpha_i$ obtenus en calculant le coefficient $b_{nk}$ du polynôme p permettent de calculer une image dérivée k fois et approximée par un polynôme de degré n.

L'ensemble des coefficients obtenu en calculant $b_{n0}$ permet donc d'effectuer un simple filtrage de l'image de départ.

De la même façon, l'ensemble des coefficients obtenu en calculant $b_{n1}$ permet d'effectuer un filtrage et une dérivation de l'image de départ.

Par ailleurs, pour un même niveau de dérivation (c'est-à-dire pour une même valeur de k), on peut obtenir une pluralité de noyaux différents, en fonction du degré n du polynôme d'approximation.

En reprenant les valeurs des coefficients $\alpha_i$ qui avaient été calculés dans l'exemple de mise en oeuvre de la méthode de Savitzky et Golay, donné précédemment, on peut obtenir les noyaux $N_1$, $N_2$ et $N_3$ suivants :

$$
N_1 = \begin{bmatrix}
0 & 0 & 0 & 0 & -14 & 0 & 0 & 0 & 0 \\
0 & 0 & 0 & 0 & 7 & 0 & 0 & 0 & 0 \\
0 & 0 & 0 & 0 & 13 & 0 & 0 & 0 & 0 \\
0 & 0 & 0 & 0 & 9 & 0 & 0 & 0 & 0 \\
-14 & 7 & 13 & 9 & 0 & 9 & 13 & 7 & -14 \\
0 & 0 & 0 & 0 & 9 & 0 & 0 & 0 & 0 \\
0 & 0 & 0 & 0 & 13 & 0 & 0 & 0 & 0 \\
0 & 0 & 0 & 0 & 7 & 0 & 0 & 0 & 0 \\
0 & 0 & 0 & 0 & -14 & 0 & 0 & 0 & 0
\end{bmatrix}
$$

$$
N_2 = \begin{bmatrix}
-14 & 0 & 0 & 0 & -14 & 0 & 0 & 0 & -14 \\
0 & 7 & 0 & 0 & 7 & 0 & 0 & 7 & 0 \\
0 & 0 & 13 & 0 & 13 & 0 & 13 & 0 & 0 \\
0 & 0 & 0 & 9 & 9 & 9 & 0 & 0 & 0 \\
-14 & 7 & 13 & 9 & 0 & 9 & 13 & 7 & -14 \\
0 & 0 & 0 & 9 & 9 & 9 & 0 & 0 & 0 \\
0 & 0 & 13 & 0 & 13 & 0 & 13 & 0 & 0 \\
0 & 7 & 0 & 0 & 7 & 0 & 0 & 7 & 0 \\
-14 & 0 & 0 & 0 & -14 & 0 & 0 & 0 & -14
\end{bmatrix}
$$

$$N_{\lambda} = \begin{bmatrix} -14 & 0 & 0 & 0 & 0 & 0 & 0 & 0 & -14 \\ 0 & 7 & 0 & 0 & 0 & 0 & 0 & 7 & 0 \\ 0 & 0 & 13 & 0 & 0 & 0 & 13 & 0 & 0 \\ 0 & 0 & 0 & 9 & 0 & 9 & 0 & 0 & 0 \\ 0 & 0 & 0 & 0 & 0 & 0 & 0 & 0 & 0 \\ 0 & 0 & 0 & 9 & 0 & 9 & 0 & 0 & 0 \\ 0 & 0 & 13 & 0 & 0 & 0 & 13 & 0 & 0 \\ 0 & 7 & 0 & 0 & 0 & 0 & 0 & 7 & 0 \\ -14 & 0 & 0 & 0 & 0 & 0 & 0 & 0 & -14 \end{bmatrix}$$

Comme tous les procédés de convolution, le procédé selon l'invention permet de favoriser les phénomènes périodiques présents dans l'image ayant une périodicité proche de la taille 2m+1 du noyau de convolution.

Par exemple, dans le cas d'une image satellite d'une surface d'eau (océan, lac...), si l'on veut observer la houle, il convient de choisir la taille m du noyau en fonction de la distance entre deux crêtes de vagues successives et du rapport d'échelle (c'est-à-dire de la relation qui lie la distance entre deux pixels et la distance entre les points géographiques qu'ils représentent).

**Revendications**

1. Procédé de filtrage d'image numérique, consistant à effectuer une convolution entre ladite image et un noyau de convolution, caractérisé en ce que les coefficients dudit noyau sont déterminés, sur un ou plusieurs alignements dudit noyau, par la méthode de Savitzky et Golay, et nuls partout ailleurs.

2. Procédé selon la revendication précédente, caractérisé en ce que lesdits alignements comprennent la ligne dudit noyau qui passe par le centre dudit noyau, et la colonne dudit noyau qui passe par le centre dudit noyau

3. Procédé selon l'une des revendications précédentes, caractérisé en ce que lesdits alignements comprennent les deux diagonales dudit noyau qui passent par le centre dudit noyau.

FIG_1

FIG_2

FIG_3

# FIG_4

Office européen
des brevets

**RAPPORT DE RECHERCHE EUROPEENNE**

Numéro de la demande

EP 98 40 1751

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP 0 604 245 A (TELECOMMUNICATIONS SA) 29 juin 1994 * abrégé * * page 3, ligne 13 - page 5, ligne 11 * --- | 1-3 | G06T5/20 |
| Y | EP 0 151 974 A (DU PONT) 21 août 1985 * page 19, ligne 26 - ligne 20 * --- | 1-3 | |
| A | EP 0 755 023 A (PHILIPS ELECTRONIQUE LAB ;PHILIPS ELECTRONICS NV (NL)) 22 janvier 1997 * abrégé * * colonne 3, ligne 8 - ligne 25; figures 3A-3D * ----- | 1-3 | |

| | DOMAINES TECHNIQUES RECHERCHES (Int.Cl.6) |
|---|---|
| | G06T |

Le présent rapport a été établi pour toutes les revendications

| Lieu de la recherche | Date d'achèvement de la recherche | Examinateur |
|---|---|---|
| LA HAYE | 4 novembre 1998 | Gonzalez Ordonez, 0 |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)